# EUROPEAN PATENT APPLICATION

(11) **EP 3 959 975 A1**
(43) Date of publication of application: **02.03.2022**
(21) Application number: 21193098.7
(22) Date of filing: 25.08.2021
(51) Int. Cl.: A01K 95/02

(54) **FISHING WEIGHT DISCHARGE DEVICE**

(30) Priority: 26.08.2020 GB 202013335
(71) Applicant: Catchum 88 Limited, Hockley SS5 5LR (GB)
(72) Inventor: STANLEY, Neil Robert, Witham, CM8 1FF (GB)
(74) Representative: Dummett Copp LLP

(57) **Abstract**

The present invention provides a fishing (or angling) device and, in particular, a running rig component. Specifically, the running rig component, in particular, a lead discharge bead, is arranged to slidably and releasably connect a lead to the fishing line such that in use the lead may slide along the line, but may be discharged or released in the event of snagging. The angling component 10 is arranged to slide on a fishing line 8, or frictionally engage with a fishing line 8 such that the lead 6 (weight) can be discharged from the running rig. The angling component 10 comprises a body 12, and a retaining member in the form of a clip arm 14. The angling component 10 of the present invention is arranged to release a lead 6 when a predetermined threshold force is overcome. In particular, the component 10 is arranged to release the lead 6 when generally opposing forces act on the angling component 10 and the lead 6 to urge the lead 6 towards a free end of the clip arm 14 and away from the body 12 with sufficient force to flex the clip arm 14 such that the lead 6 slips off the clip arm 14. Sufficient force to discharge the lead 6 may result from pulling of the hook line and angling component 10 by a hooked fish, and the weight or inertia of the lead 6. In this way, the lead 6 may be retained by the clip during handling, casting and retrieval of a rig, but may be released if the lead 6 is snagged or tangled whilst a fish is hooked.

## Description

### FIELD OF THE INVENTION

The present invention relates to a fishing weight discharge device, a fishing rig including a fishing weight discharge device and a method of discharging a fishing weight.

### BACKGROUND TO THE INVENTION

An angling or fishing rig generally includes a hook secured to a length of line (a hooklength or hook line), and a weight or lead which may be used to facilitate casting of the rig and/or to anchor the rig in position in a body of water. The hook line and lead may be secured to a connector, or may be secured individually to a main line.

It is desirable that the lead (weight) can be released or discharged from the rig in the event that the lead becomes snagged or trapped by an underwater obstruction. With such an arrangement, although the lead may be lost, the remainder of the rig may be retrieved. Furthermore, some rigs are arranged to retain a lead during casting and retrieval of the rig, but to release the lead if the lead becomes snagged whilst a fish is hooked. In this way, unnecessary suffering of the fish may be avoided.

In some rigs, known as bolt rigs, a length of hook line allows a fish which has taken a bait to travel a short distance before the hook line is pulled taught against the resistance provided by the lead, thereby helping to set the hook in the fish's mouth. In such rigs, the lead may be secured to the line by a connector which is fixed in place on the line.

In other rigs, known as sliding or running rigs, the lead or float is arranged to slide along the line, to allow the line to run when a bait is taken, which may improve bite detection and may reduce the risk of the fish being spooked initially.

In some 'semi-fixed' running rigs, the lead may be releasably retained by a bead on the line which is arranged to offer some resistance to a pull on the hook line (thus helping to set the hook), before being pulled free such that the lead slides freely along the line.

A disadvantage of running rigs is that the lead cannot be released from the line if it becomes snagged. Instead, the line runs freely through a connecting ring of the lead once a fish is hooked, which may cause unnecessary suffering for the fish and may increase the chances of snagging other part of the rig.

It is an aim of the present invention to overcome at least one problem associated with the prior art, whether referred to herein or otherwise.

### SUMMARY OF THE INVENTION

According to a first aspect of the present invention there is provided a fishing tackle device comprising a running rig component, the running rig component comprising a fishing weight discharge device comprising:
an elongate body having a first longitudinal end and a second longitudinal end, the elongate body including a bore extending between the first end and the second end, the bore being arranged, in use, to allow a fishing line to extend therethrough, and
a retaining member to releasably secure a fishing weight to the device,
wherein the bore through the elongate body is non-linear.

The bore may be arcuate. The bore may be curved.

The bore may be S-shaped.

The bore may be angled.

The bore may be V-shaped.

The bore may provide an entry for the fishing line at the first end and an exit for the fishing line at the second end. The entry may extend at a tangential angle offset from a tangential angle of the exit. The angle may be in the region of 90 degrees to 135 degrees.

Preferably the bore provides a fishing line passageway through the elongate body. Preferably the bore provides an arcuate passageway through the elongate body. The arcuate passageway may be curved through an angle of between about 90 degrees and 135 degrees.

The bore may be shaped (and/or dimensioned) to enable a fishing line to move freely therethrough by pulling the fishing line from one end of the elongate body.

The bore may be shaped (and/or dimensioned) to prevent movement of the elongate body along a taut fishing line.

Preferably, with a fishing line passing through the bore and with the fishing line in tension, the shape (and/or dimensions) of the bore creates a resistance to movement of the elongate body relatively along the fishing line.

The elongate member may comprise a tube. The tube may extend around a curved/arcuate path.

The bore may have a circular inner surface to enable the fishing line to move therethrough.

The diameter of the bore is predetermined to prevent or inhibit the body sliding relatively along a fishing line when the fishing line is in a taut condition and/or the fishing line being pulled in two (different/opposing/opposite) directions on either side of the body. The diameter of the bore is predetermined to allow free movement of a fishing line through the bore with the fishing line being pulled in a single direction.

The length of the bore is predetermined to prevent or inhibit the body sliding relatively along a fishing line when the fishing line is in a taut condition and/or the fishing line being pulled in two (different/opposing/opposite) directions on either side of the body. The length of the bore is predetermined to allow free movement of a fishing line through the bore with the fishing line being pulled in a single direction.

Preferably the bore extends/travels longitudinally through an angle and whereby the angle is predetermined to prevent or inhibit the body sliding relatively along a fishing line when the fishing line is in a taut condition and/or the fishing line being pulled in two (different/opposing/opposite) directions on either side of the body. The angle through the bore is predetermined to allow free movement of a fishing line through the bore with the fishing line being pulled in a single direction.

Preferably the combination of the diameter of the bore and/or the length of the bore and/or the angle through the bore is/are predetermined to prevent or inhibit the body sliding along a fishing line when the fishing line is in a taut condition and/or the fishing line being pulled in two (different/opposing/opposite) directions on either side of the body. Preferably the combination of the diameter of the bore and/or the length of the bore and/or the angle through the bore is/are predetermined to allow free movement of a fishing line through the bore with the fishing line being pulled in a single direction.

Preferably the retaining member provide means for attaching a weight to the body.

Preferably the retaining member is arranged to release weight if force is applied to the body such that the force moves the body relative to the weight until the weight is disengaged from the retaining member. Preferably the force is applied through the fishing line and whilst the weight may be secured to/engaged with/retained by an obstruction, for example an underwater (and inaccessible) obstruction.

The retaining member may comprise a clip. The retaining member may comprise a clip arm.

The clip arm may comprise a resilient clip arm.

The clip arm may be secured at a single end to the body and may provide a free end which may be movable relative to the body. Preferably the free end is movable towards and away from the body.

Preferably the free end is movable between a first (closed) position and a second (open position). Preferably, in the first (closed) position, a ring located around (and/or engaged on) the clip arm is retained on (and/or is not (freely) slidably removable from) the clip arm. In the second (open) position, a ring located around (and or engaged on) the clip arm is slidably removable from the clip arm and a central opening of the ring is movable over the free end of the clip arm.

Preferably the clip arm has a relieved/reduced thickness portion which enables (encourages/promotes) at least the free end to be flexed away from the body.

The device may comprise an abutment member. The abutment member may project outwardly from the body. The abutment member may shroud and/or at least partially conceal the free end of the clip arm. The abutment member may project outwardly from the body and protect the free end of the clip arm and may prevent or inhibit objects sliding between an outer surface of the body and the free end of the clip arm and/or into the retaining area defined between the clip arm and the body.

The abutment member may provide a ramped surface. The ramped surface may extend outwardly from an outer surface of the body and preferably to a location adjacent to (and/or aligned with) an outer surface of the clip arm. Accordingly, objects may be directed up the ramped surface and over the outer surface of the clip arm.

The free end of the clip arm may comprise a tip comprising an enlarged head. The tip may provide an obstacle (incline/raised portion) over which a ring suspended from the clip arm must travel to disengage the suspended ring from the clip arm. Accordingly, the tip may prevent or inhibit inadvertent removal of a suspended ring from the clip arm.

The clip arm may comprise a first portion and a second portion. The first portion may extend outwardly from the body and the second portion may be arranged at an angle to the first portion and may extend generally along but spaced apart from the outer surface of the body. The second portion may be angled from the first portion towards the outer surface of the body.

Preferably the second portion is movable relative to the first position. The second portion may be flexibly movable relative to the first portion.

The clip arm may provide a seat. The seat may be arranged, in use, to retain a ring of a suspended lead therein. The seat may comprise a recessed area defined along an inner surface (of the second portion) of the clip arm. The seat may be defined between the first portion and the second portion.

The clip arm may be secured to the body at or adjacent to and/or toward the second end (hook line end) of the body. The clip arm may extend towards the first end /rod line end (and/or away from the second end) of the body.

The first portion of the clip arm may be located towards the second end of the body. The abutment member may be located between the tip/end of the clip arm and the first end (rod line end) of the body.

The body and clip arm may comprise a single integral component. The single integral component may comprise a single moulded component. The single integral component may comprise a plastics material.

The device may comprise a retaining band. The retaining band may be arranged to retain the tip of the clip arm towards the body. The retaining band may bias (preferably resiliently bias) the tip towards an outer surface of the body.

The retaining band may comprise a sleeve or sleeve section.

The retaining band may comprise a resilient material.

The retaining band may locate around an outer periphery of the device. The outer periphery of the device comprises outer surface of the body and clip arm

The retaining band may be movable between a first (open/disengaged/un-securing) position and a second (closed/retaining) position. In the second position the retaining band may located around at least a part of an outer surface of the clip arm. In the first position the retaining band does not extend around an outer surface of the clip arm and may located solely around an outer surface of the body (which may include the abutment member).

Preferably the retaining band is movable along a length of the body. Preferably the retaining band is movable away from the first end to move from the first position to the second position and preferably is movable towards the first end to move from the second position to the first position.

Preferably, in the second (retaining/closed) position the retaining band spans across a gap located between a tip of the clip arm and the body and, more preferably, a gap located between the tip of the clip arm and the abutment member.

According to a second aspect of the present invention there is provided a running rig comprising a fishing weight discharge device, a fishing weight, a fishing line including a first section and a second section, the fishing weight discharge device comprising:
an elongate body having a first longitudinal end and a second longitudinal end, the elongate body including a bore extending between the first end and the second end, the bore being arranged, in use, to allow the fishing line to extend therethrough and, in which, the first section of fishing line extends away from the first end and the second section of fishing line extends away from the second end, and
a retaining member to releasably secure a fishing weight to the device,
wherein the bore through the elongate body is non-linear

The first section of fishing line may extend between the device and a rod. The first section of line may comprise (solely) rod line.

The second section of line may extend between the device and a hook. The second section of line may comprise a section of rod line and a hook link (hook line). The hook link (hook line) may be attached to the rod line by an attachment component for example a swivel or a clip. The length of this section of rod line between the hook link and the device may vary.

According to a third aspect of the present invention there is provided a method of providing a running rig, the method comprising locating a fishing line through a bore of a fishing weight discharge device, the fishing weight discharge device comprising:
an elongate body having a first longitudinal end and a second longitudinal end, the elongate body including the bore extending between the first end and the second end, the bore being arranged, in use, to allow the fishing line to extend therethrough and, in which,
a retaining member to releasably secure a fishing weight to the device,
wherein the bore through the elongate body is non-linear.

Preferably the fishing line comprises a first section of rod line and a second section of rod line and wherein the method comprises threading the fishing line (rod line) through the bore in order for the first section of rod line to extend away from the first end and the second section of rod line to extend away from the second end.

The method may comprise attaching a hook link (or hook line) to a free end of the second section of the rod line.

### BRIEF DESCRIPTION OF THE DRAWINGS

The present invention will now be described, by way of example only, with reference to the accompanying drawings, in which:
Figure 1 is a side view of a preferred embodiment of an angling component in accordance with the present invention;
Figure 2 is a cross-sectional view of a preferred embodiment of an angling component in accordance with the present invention;
Figure 3 is a side view of a preferred embodiment of an angling component in accordance with the present invention, as part of an angling rig including a line and a lead; and
Figure 4 is a side view of another preferred embodiment of an angling component in accordance with the present invention, as part of an angling rig including a line and a lead.

### DESCRIPTION OF THE PREFERRED EMBODIMENTS

The present invention provides a fishing (or angling) device and, in particular, a running rig component. Specifically, the running rig component, in particular, a lead discharge bead, is arranged to slidably and releasably connect a lead to the fishing line such that in use the lead may slide along the line, but may be discharged or released in the event of snagging. The terms fishing and angling are used interchangeably through this specification. Similarly, the term lead and weigh are used interchangeably such that the term lead is not restricted to the actual formation of a fishing weight strictly from lead as understood by the art.

Running rigs provide a simple and effective lead weight arrangement in which the lead weight is not fixed in position on the fishing line. The lead weight is attached to the fishing line using a running rig component and specifically a running ring or running bead. The present invention provides an improved running rig component or running bead. Such a running rig may provide the benefits of running rigs (i.e. bite indication) whilst also allowing the lead wright to be reliably discharged, if necessary.

The angling component 10 is arranged to slide on a fishing line 8, or frictionally engage with a fishing line 8 such that the lead 6 (weight) can be discharged from the running rig.

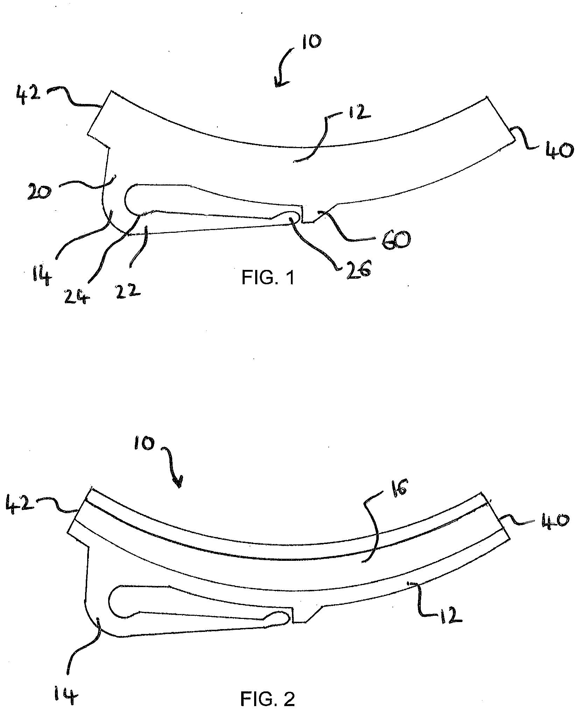

As shown in Figure 1, an angling component 10 comprises a body 12, and a retaining member in the form of a clip arm 14. The body 12 is elongate and extends between a first end 40 and a second end 42. In the preferred embodiment, the first end 40 is a rod end or rod line end from which a section 41 of the rod line extends in use (i.e. towards the right in Figures 1 to 3), and the second end 42 is a hook or hook line end from which a further section 43 of the rod line extends (i.e. towards the left in Figures 1 to 3) and is then attached to a hook link normally by way of a swivel or a clip. Accordingly, in the preferred embodiment, the single smooth rod line extends all the way from the rod through a bore and is then attached to a hook link (hook line) by way of a swivel or clip. This enables the fishing line to smoothly run through a bore of the device unobstructed by knots, swivels, beads, clips or other components mounted on the fishing line.

The body 12 is generally tubular, comprising a bore 16 (see Figure 2) which extends longitudinally through the body 12 and opens at the first and second ends 40, 42 of the body 12. The bore 16 is arranged such that a length of fishing line 8 may be threaded though the bore 16 in use. The diameter of the bore 16 is sized to receive with clearance a diameter of the fishing line. Accordingly, the fishing line 8 is feely movable through the bore 16 when one end of the fishing line 8 is pulled away from the bore 16, for example in use with the hook line moving naturally due to the currents and buoyancy adjacent to the hook (e.g. a boilie). As will be explained later, when both ends of the fishing line are pulled away from the respective ends of the bore 16, tension is created in the fishing line 8 and the taut fishing line 8 provides a linear section of taut fishing line. Such a situation will be encountered when attempting to reel in a hooked fish/carp. The shape of the bore 16 then prevents free movement of the body 12 along this section of fishing line 8 and this fixed configuration enables the lead 6 to be discharged.

In the present embodiment, the body 12 is non-linear and preferably curved or bent or arcuate. As it will be clear from the present description, the non-linear shape of the bore 16 is not temporary (and is permanent). The body 12 is not just temporarily flexed to create the non-linear shape. This would not enable the shape of the bore 16 to perform its required function, i.e. preventing movement along a taut line as will be explained. The body 12 is therefore substantially rigid (not readily flexible). The non-linear shape of the bore 16 is similarly permanent and not a temporary shape which is only created when a flexing force is applied. Accordingly, the non-linear shape of the bore 16 is provided with the body 12 in an unstressed state (not the subject to a bending moment/flexing force). The term non-linear refers to the longitudinal direction or central longitudinal axis of the bore 16. In particular, the non-linear shape of the bore 16 would be clearly shown in a side cross-section (x-y plane) of the device rather than in a plan view (y-z plane). The other cross-section ((x-z plane) would show a circular cross section of the internal periphery of the bore 16. The bore 16 is non-linear such that the longitudinal direction at one end of the bore 16 is offset at an angle (extends in a different angular direction) relative to the longitudinal direction at the other end of the bore 16. Specifically, the bore 16 provides an entry for the fishing line 8 at the first end and an exit for the fishing line 8 at the second end. The entry may extend at a tangential angle offset from a tangential angle of the exit. The angle may be greater than 90 degrees. The angle may be less than 135 degrees.

As explained above and as shown in Figure 1, the body 12 is curved along its length, i.e. longitudinally. In particular, the body 12 has an arcuate shape. Accordingly, the bore 16 is also non-linear and preferably curved, or bent or arcuate, as shown in Figure 2. In this way, the bore 16 provides a non-linear and preferably an arcuate passageway through the body 12. A portion of the bore 16 adjacent the first end 40 of the body 12 therefore extends at an angle to a portion of the bore 16 adjacent the second end 42 of the body 12.

The first end 40 may provide an entry region for the fishing line 8 into the bore 16 and the second end 42 may provide an exit region for the fishing line 8 from the bore 16. The terms entry and exit are used interchangeably since the fishing line 8 will move both ways into and out of the bore 16.

The clip arm 14 is connected to the body 12 and extends alongside the body 12 so as to form a clip with the body 12. The clip arm 14 extends adjacent to a convex side of the curved body 12. The clip arm 14 is connected to the body adjacent the second end 42 of the body 12. A first portion 20 of the clip arm 14 is connected to the body 12 adjacent the second end 42 of the body 12 and extends (projects) away from the body 12. A second portion 22 of the clip arm 14 extends from the first portion 20 towards the first end of the body 12. In this way, the second portion 22 of the clip arm 14 is spaced apart from the body 12 to provide a clip which is closed adjacent the second end 42 of the body 12 and opens towards the first end 40 of the body 12. The second portion 22 of the clip arm 14 extends towards a free end of the clip arm 14. In this embodiment, the clip arm 14 extends part way along the length of the body 12. In use, a ring 50 or loop may be fed onto the clip arm 14 from the free end of the clip arm 14. In particular, the ring 50 locates around the clip arm 14 and is movable along the longitudinal length of the clip arm between a free end/tip 26 and a seat 24. An inner surface of the clip arm 14 forms a retaining area with an outer surface of the body 12. The ring 50 suspends the lead 6 from the clip arm 14. The ring 50 is slidably located on the clip arm and is movable to a small extent between the seat 24 and the tip 26. However, the seat 24 encourages the ring to locate within this area rather than adjacent to the tip 26.

Where the first and second portions 20, 22 of the clip arm 14 meet, a portion of the clip arm 14 has a reduced thickness, so as to provide a seat 24. A corresponding ridge or ramp is formed on the second portion 22 of the clip arm 14. The ramp extends towards the body 12. The second portion 22 of the clip arm 14 tapers away from the ramp, having a reduced thickness towards the free end of the clip arm 14. The free end of the clip arm 14 is provided with an enlarged tip 26.

The clip arm 14 is arranged to flex or elastically deform in use such that the free end of the clip arm 14 may be moved away from the body 12. Accordingly, at least part of the clip arm 14 comprises a resilient material. In a first, default, closed position of the clip, the free end of the clip arm 14 is blocked by a stop 60 or blocking formation provided on the body 12 proximate the free end of the clip. The blocking formation comprises a ramped surface which faces away from the clip, towards the first end 40 of the body 12. The blocking formation is arranged to block the open end of the clip when the clip arm 14 is in the first position. In this way, an item such as a loop or ring 50 cannot be threaded onto or removed from the clip arm 14 when the clip arm 14 is in the first position.

The ramped surface of the blocking formation also helps to prevent the clip arm 14 from hooking or snagging on objects (e.g. snagging on weed whilst reeling in or retrieving a rig). The reduced-thickness portion of the clip arm 14 may provide a resilient portion of the clip arm 14 which is arranged to bend or flex in use. In particular, to attach the lead 6 to the device 10, the clip arm 14 is manually flexed and the ring 50 is inserted over the tip 26 of the clip arm 14 such that the tip passes through the ring 50. The clip arm is biased (naturally urged) towards a closed position. The ring 50 and lead 6 are thereby simply and easily attachable to the device 10.

In a second, open position of the clip, the free end of the clip arm 14 is positioned further away from the body 12, clear of the blocking formation, so as to open the clip. The clip arm 14 may therefore be urged into a second, open position in which a loop or ring 50 may be threaded onto, or slipped off the clip arm 14.

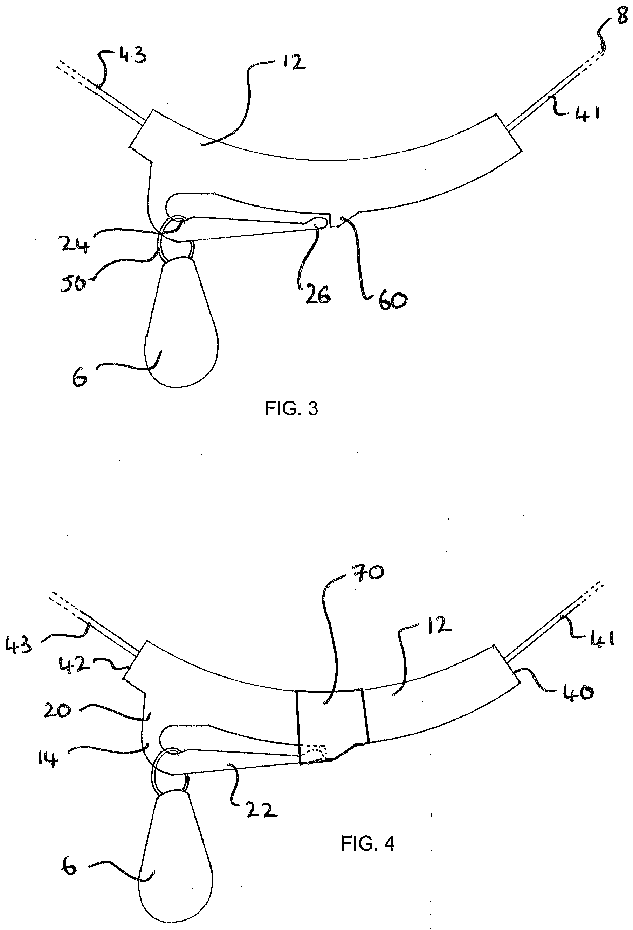

Referring now to Figure 3, which shows the angling component 10 in use as part of a rig, a lead 6 comprises a connecting ring 50 or loop which may be threaded onto the clip arm 14 when the clip arm 14 is in the open position. The connecting ring 50 suspends the lead 6 from the device 10. The open position is created manually by gripping and flexing the tip 26 away from the body 12. The tip then naturally returns to the closed position in the absence of the manual force. With the clip arm 14 in the closed position, the lead 6 is retained by the clip arm 14 and blocking formation.

A fishing line 8 is threaded through the bore 16, such that the angling component 10 is threaded onto the fishing line 8, as shown in Figure 3. In particular, the angling component 10 is oriented on the fishing line 8 such that the first end 40 of the body 12 is disposed towards a rod end of the fishing line 8, and the second end 42 of the body 12 is disposed towards a hook end, or terminal end of the fishing line 8, to which a hook is attached. In this arrangement, the open end of the clip faces towards a rod end of the line 8.

Advantageously, the angling component 10 is arranged to slide on the fishing line 8 when there is relatively less tension in the line (i.e. the line is relatively slack) but to grip or frictionally engage the line 8 when there is relatively more tension in the line 8 (i.e. when the line 8 is relatively taut). In this way, the angling component 10 may be used as part of a running rig, allowing a lead 6 to slide along the line 6, but is arranged to release or discharge the lead 6 in the event that the lead 6 becomes snagged whilst a fish is hooked, as described further below.

In use, the fishing line 8 is curved (or travels in an arcuate/curved path) where it extends through the arcuate passageway provided by the bore 16. With this arrangement, when the line 8 is relatively slack, the line 8 may conform to the curvature of the bore 16. In this way, there is relatively little friction between the line 8 and an inner surface of the bore 16, such that the line 8 may run freely through the bore 16. In a normal stable state, the device 10 rests on the lake bed (stream/river/water bed) due to the close connection of the lead 6. The first end 40 provides a tubular section to direct the rod line 41 away from the lake bed at an angle. The second end 42 provides a shorter tubular section and enables a second section 43 of rod line and the hook line to extend upwardly at a greater angle as created by the buoyancy of a boilie or similar buoyant member adjacent to the hook. This also natural separates two different lengths of fishing line either side of the device 10, specifically the second section 43 of rod line and the hook line from the first section 41 of rod line. When tension in the line 8 extending through the bore 16 is increased, the tension acts to straighten the line 8. Since the curvature of the line 8 is constrained by the bore 16, the line 8 is urged against the inner surface of the bore 16, thereby increasing friction between the line 8 and the bore 16.

With this arrangement, when a rig is set, for example with the lead 6 resting on a lakebed, a relatively smaller tension exerted on the hook line by a fish will draw the line 8 (i.e. the second section 43 of the rod line out of the second end 42 of the bore 16) through the angling component 10, allowing the lead 6 to slide with respect to the line 8. However, if a fish is hooked, and tension in the line 8 is increased, the angling component 10 grips or frictionally engages with the line 8 such that the component 10 moves with the line 8. In this way, as the fish pulls on the hook end of the line 8, the lead 6 may move with the angling component 10, or, if a threshold force between the lead 6 and the component 10 is overcome, the clip arm 14 may flex and be pulled free from the lead 6, thereby discharging or ejecting the lead 6.

In this way, the angling component 10 may be used as part of a running rig, in which the angling component 10 is anchored by a lead 6 connected to the clip, and the line 8 may run through the angling component 10 when there is relatively less tension in the line 8 (for example in the initial stages of a fish taking the bait). In this way, bite detection may be improved, whilst still allowing the lead 6 to be released as described above.

It will be appreciated that it may not be desirable for a lead 6 to be discharged too readily from the angling component 10, since the need to replace the lead frequently may be an inconvenience and/or an expense for the angler. The angling component 10 of the present invention is therefore arranged to release a lead 6 when a predetermined threshold force is overcome. In particular, the component 10 is arranged to release the lead 6 when generally opposing forces act on the angling component 10 and the lead 6 to urge the lead 6 towards the free end of the clip arm 14 and away from the body 12 with sufficient force to flex the clip arm 14 such that the lead 6 slips off the clip arm 14. Sufficient force to discharge the lead 6 may result from pulling of the hook line and angling component 10 by a hooked fish, and the weight or inertia of the lead 6. In this way, the lead 6 may be retained by the clip during handling, casting and retrieval of a rig, but may be released if the lead 6 is snagged or tangled whilst a fish is hooked.

In use, the ramp on the second portion 22 of the clip arm 14 helps to retain the lead 6 on the clip. The connecting ring 50 of the lead 6 may be disposed in the seat 24 provided on the clip arm 14. In this way, the lead 6 may not slide freely along the clip arm 14, but must be urged with sufficient force to overcome the ramp. Also, the blocking formation helps to prevent the lead 6 from being removed from the clip arm 14 until sufficient force is applied to flex the clip arm 14 such that the free end of the clip arm 14 is moved away from the blocking formation to open the clip.

As can be seen in Figure 4, another embodiment of an angling component 10 further comprises a retaining band 70. In the present embodiment, the retaining band 70 comprises a resilient ring or sleeve sized for an interference fit around the body 12 and clip arm 14. In use, the retaining ring 70 is threaded onto the fishing line 8 on a rod line side of the angling component 10. The retaining ring 70 is arranged to slide over the first end 40 of the body 12, and to be stretched over the blocking formation and free end of the clip arm 14, so as to bias the clip arm 14 into the closed position. In use, the retaining band 70 may be dislodged when a lead 6 is urged towards the free end of the clip. In this way, the retaining band 70 may be used to adjust (increase) the predetermined threshold force required for release of the lead 6 from the angling component 10.

In use, sliding of the angling component 10 towards the hook end of the line 8 may be limited by a stop on the line 8 such as swivel or bead which is arranged to abut the second end 42 of the body 12. Accordingly, when the component 10 is suspended with the first end 40 of the body 12 uppermost, such as during preparation of a rig, or casting, the clip arm 14 extends generally upwards, and gravity acts to retain the lead 6 in the clip.

It will be appreciated that the body 12 of the angling component need not have an arcuate shape. In some embodiments, the body may be generally straight, whilst having an arcuate passageway therethrough.

In some embodiments, the bore may provide a sinusoidal, spiral, kinked, angled, zig-zag or another suitable non-linear shaped passageway through the body.

As described above, the fishing line 8 is able to freely move through the elongate body 12 which maintains the benefit provided by running rigs. The lead weight 6 does not have to be moved with the line 8 and movement signals are transmitted efficiently through the fishing line 8 moving freely back to the bank. This transmission enables movement of the rig/hook to be directly conveyed back, for example, to a bite indicator. Furthermore, due to the free movement of the fishing line 8 through the bore 16 in the elongate body 12, the fish (e.g. carp) cannot use the resistance of the weight/lead 6 to help in attempting to dislodge the hook. However, as explained previously, should the lead weight 6 become snagged, in conventional running rigs it is problematic in attempting to discharge the lead weight 6 due to the fact that the fishing line does run freely relative to the lead. This situation can prove significantly harmful to a hooked fish following the breaking/snapping of the fishing line since the fish may not be able to discharge the lead in a running rig due to the fishing line running freely through the connector such that the fish cannot transmit sufficient force to discharge the lead weight. Accordingly, a broken line may be an issue and pose a problem. The snagging of the lead may only be an issue if the fish is tethered to the snagged lead bead on a running line if the line breaks then the broken end of the line will be pulled through the bead therefore releasing the fish

The present invention provides an arrangement whereby the fishing line is prevented from running freely relative to the lead. This selective/temporary prevention of relative free movement enables the lead to be discharged.

## Claims

1. A fishing tackle device comprising a running rig component (10), the running rig component (10) comprising a fishing weight discharge device comprising:
an elongate body (12) having a first longitudinal end (40) and a second longitudinal end (42), the elongate body (12) including a bore (16) extending between the first end (40) and the second end (42), the bore (16) being arranged, in use, to allow a fishing line (8) to extend therethrough, and
a retaining member to releasably secure a fishing weight (6) to the device,
wherein the bore (16) through the elongate body (12) is non-linear.

2. A fishing tackle device according to Claim 1 in which the bore (16) is shaped and dimensioned to enable a fishing line (8) to move freely therethrough by pulling the fishing line (8) from one end of the elongate body (12) and wherein the bore (16) is shaped and dimensioned to prevent movement of the elongate body (12) along a taut fishing line (8).

3. A fishing tackle device according to Claim 1 or Claim 2 in which the bore (16) extends longitudinally through an angle and whereby the angle inhibits the body (12) sliding relatively along a fishing line (8) when the fishing line (8) is in a taut condition and the fishing line (8) is being pulled in two opposing directions on either side of the body (12) and, in which, the angle through the bore (16) allows free movement of a fishing line (8) through the bore (16) with the fishing line (8) being pulled in a single direction.

4. A fishing tackle device according to any preceding claim in which the retaining member comprises a clip comprising a resilient clip arm (14), wherein the clip arm (14) is secured at a single end (20) to the body (12) and provides a free end (26) which is movable towards and away from the body (12) and in which the free end (26) is movable between a closed position and an open position and wherein, in the closed position, a ring (50) engaged on the clip arm (14) is retained on and is not freely slidably removable from the clip arm (14) and, in which, in the open position, the ring (50) engaged on the clip arm (14) is slidably removable from the clip arm (14) and a central opening of the ring (50) is movable over the free end (26) of the clip arm (14).

5. A fishing tackle device according to any preceding claim in which the device comprises an abutment member (60) and wherein the abutment member (60) projects outwardly from the body (12) and in which the abutment member (60) shrouds and at least partially conceals the free end (26) of the clip arm (14).

6. A fishing tackle device according to Claim 5 in which the abutment member (60) projects outwardly from the body (12) and protects the free end (26) of the clip arm (14) and prevents objects sliding between an outer surface of the body (12) and the free end (26) of the clip arm (14).

7. A fishing tackle device according to Claim 5 or Claim 6 in which the abutment member (60) provides a ramped surface and the ramped surface extends outwardly from an outer surface of the body (12) to a location adjacent to and aligned with an outer surface of the clip arm (14).

8. A fishing tackle device according to any preceding claim in which the free end (26) of the clip arm (14) comprises a tip comprising an enlarged head and wherein the tip provides a raised portion over which a ring (50) suspended from the clip arm (14) must travel to disengage the suspended ring (50) from the clip arm (14).

9. A fishing tackle device according to any one of Claim 4 to Claim 8 in which the clip arm (14) is secured to the body (12) towards a hook line end of the body (12) and the clip arm (14) extends towards a rod line end of the body (12).

10. A fishing tackle device according to any one of Claim 4 to Claim 9 in which the device comprises a retaining band (70) and wherein the retaining band (70) is arranged to retain a tip of the clip arm (14) towards the body (12) and in which the retaining band (70) resiliently biases the tip towards an outer surface of the body (12).

11. A fishing tackle device according to Claim 10 in which the retaining band (70) is movable between an open position and a closed position and, in which, in the closed position the retaining band (70) locates around at least a part of an outer surface of the clip arm (14) and, in the open position, the retaining band (70) does not extend around an outer surface of the clip arm (14) and locates solely around an outer surface of the body (12).

12. A fishing tackle device according to Claim 11 in which the retaining band (70) is movable along a length of the body (12) and wherein the retaining band (70) is movable away from the first end (40) to move from the open position to the closed position and is movable towards the first end (40) to move from the closed position to the open position.

13. A fishing tackle device according to Claim 11 or Claim 12 in which, in the closed position the retaining band (70) spans across a gap located between a tip of the clip arm (14) and the body (12).

14. A running rig comprising a fishing weight discharge device, a fishing weight (6), a fishing line (8) including a first section (41) and a second section (43), the fishing weight discharge device comprising:
an elongate body (12) having a first longitudinal end (40) and a second longitudinal end (42), the elongate body (12) including a bore (16) extending between the first end (40) and the second end (42), the bore (16) being arranged, in use, to allow the fishing line (8) to extend therethrough and, in which, the first section (41) of fishing line (8) extends away from the first end (40) and the second section (43) of fishing line (8) extends away from the second end (42), and
a retaining member to releasably secure the fishing weight (6) to the device,
wherein the bore (16) through the elongate body (12) is non-linear.

15. A method of providing a running rig, the method comprising locating a fishing line (8) through a bore (16) of a fishing weight discharge device, the fishing weight discharge device comprising:
an elongate body (12) having a first longitudinal end (40) and a second longitudinal end (42), the elongate body (12) including the bore (16) extending between the first end (40) and the second end (42), the bore (16) being arranged, in use, to allow the fishing line (8) to extend therethrough and, in which,
a retaining member releasably secures a fishing weight (6) to the device, and
wherein the bore (16) through the elongate body (12) is non-linear.
